# DEMANDE DE BREVET EUROPEEN

(11) **EP 4 148 317 A1**
(43) Date de publication de la demande: **15.03.2023**
(21) Numéro de dépôt: 22194784.9
(22) Date de dépôt: 09.09.2022
(51) Int. Cl.: F16M 11/04, F16M 13/00, G01S 7/02, G01S 13/92

(54) **ENSEMBLE DE VERROUILLAGE**

(30) Priorité: 14.09.2021 FR 2109644
(71) Demandeur: Idemia Identity & Security France, 92400 Courbevoie (FR)
(72) Inventeur: TOUZ, Frédéric, 92400 Courbevoie (FR); ROGER, Luc, 92400 Courbevoie (FR); ABDALCANNY, Amil, 92400 Courbevoie (FR); SAVARY, Jean Claude, 92400 Courbevoie (FR)
(74) Mandataire: Idemia

(57) **Abrégé**

La présente invention concerne un ensemble de verrouillage (1) configuré pour verrouiller un radar de contrôle de véhicules par rapport à un support comprenant :
- une première platine (4) configurée pour être montée fixe sur l'un parmi le support et le radar de contrôle de véhicule et présentant une première face (7) ;
- une deuxième platine (5) configurée pour être montée fixe sur l'autre parmi le radar de contrôle de véhicules et le support, la deuxième platine (5) comprenant une deuxième face (6) configurée pour être placée face à la première face (7) de la première platine (4) ;
- une butée configurée pour bloquer en translation la première platine (4) par rapport à la deuxième platine (5) suivant un premier sens (A) le long d'une direction de verrouillage (X); et
- un verrou distinct de la butée et mobile en translation le long de la direction de verrouillage (X), le verrou étant configuré pour bloquer en translation la première platine (4) par rapport à la deuxième platine (5) dans un deuxième sens (B) qui est opposé au premier sens (A).

## Description

### DOMAINE DE L'INVENTION

L'invention concerne de manière générale le domaine du verrouillage amovible et manuel de deux éléments. L'invention trouve particulièrement application dans le cas du verrouillage d'une pièce sur un support du type trépied, en plus particulièrement encore lorsque la pièce est volumineuse et présente un certain poids. Par exemple, l'invention peut être mise en œuvre dans le verrouillage d'un radar de contrôle de véhicules sur son support.

### ETAT DE LA TECHNIQUE

Il existe aujourd'hui divers ensembles de verrouillage permettant de verrouiller et déverrouiller manuellement deux éléments correspondants.

Par exemple, il existe des ensembles de verrouillage configurés pour fixer de manière amovible et manuelle une pièce sur un support, tel qu'un trépied. De tels ensembles de verrouillage peuvent comprendre, dans le cas typiquement d'un dispositif de capture d'image du type caméra vidéo ou appareil photo, des moyens de vissage permettant de solidariser le dispositif et son trépied. Toutefois, de tels moyens de vissage ne permettent pas une fixation solide et robuste et sont difficilement envisageables lorsque la pièce à fixer est encombrante et lourde comme c'est notamment le cas d'un radar de contrôle de véhicule. De surcroit, ces radars doivent être fixés en hauteur, de sorte que l'opérateur doit agir à l'aveugle, c'est-à-dire sans voir l'ensemble de verrouillage lors de l'accouplement des éléments, ou être assisté.

### EXPOSE DE L'INVENTION

Un but de l'invention est de remédier aux inconvénients précités, en proposant un ensemble de fixation d'un premier élément sur un deuxième élément, notamment d'un radar de contrôle de véhicules sur un support type trépied, qui puisse être verrouillé et déverrouillé manuellement et à l'aveugle par un opérateur, qui soit simple à réaliser et facilement adaptable à tout type d'élément, quel que soit son encombrement et son poids.

Il est à cet effet proposé, selon un premier aspect de l'invention un ensemble de verrouillage d'un premier élément par rapport à un deuxième élément comprenant :
- une première platine configurée pour être montée fixe sur le premier élément et présentant une première face ;
- une deuxième platine configurée pour être montée fixe sur le deuxième élément, la deuxième platine comprenant une deuxième face configurée pour être placée face à la première face de la première platine ;
- une butée configurée pour bloquer en translation la première platine par rapport à la deuxième platine suivant un premier sens le long d'une direction de verrouillage; et
- un verrou distinct de la butée et mobile en translation le long de la direction de verrouillage, le verrou étant configuré pour bloquer en translation la première platine par rapport à la deuxième platine dans un deuxième sens qui est opposé au premier sens.

En particulier, le deuxième élément est un radar de contrôle de véhicule et le premier élément est un support. La première platine est configurée pour être montée fixe sur l'un parmi le support et le radar de contrôle de véhicule. La deuxième platine est configurée pour être montée fixe sur l'autre parmi le radar de contrôle de véhicules et le support.

Certaines caractéristiques préférées mais non limitatives de l'ensemble de verrouillage selon le premier aspect sont les suivantes, prises individuellement ou en combinaison :
- le verrou comprend une gâche montée sur la deuxième platine, une attache fixée sur l'une parmi la première face de la première platine et la gâche et comprenant une rainure de blocage, et un logement formé dans l'autre parmi la première face de la première platine et la gâche et configurée pour recevoir l'attache, le logement étant délimité par une bordure. La gâche est par ailleurs mobile en translation le long de la direction de verrouillage entre une configuration de verrouillage dans laquelle la bordure du logement est insérée dans la rainure de blocage de l'attache et bloque en translation la gâche par rapport à la première et à la deuxième platine suivant le deuxième sens, et une configuration de déverrouillage dans laquelle la bordure du logement est libérée de la rainure de blocage de l'attache. Le cas échéant, la rainure de blocage est en outre configurée pour bloquer en translation la deuxième platine par rapport à la première platine suivant une direction normale à la première face de la première platine ;
- l'attache comprend un chanfrein convergeant d'une base de l'attache en direction du logement, la rainure de blocage étant formée à proximité de la base de l'attache ;
- la gâche est raccordée à la deuxième platine par l'intermédiaire d'un moyen de rappel configuré pour ramener la gâche vers la configuration verrouillée, la butée, le moyen de rappel et la gâche étant alignés le long de la direction de verrouillage ;
- la gâche est fixée sur la deuxième platine par l'intermédiaire d'entretoises configurées pour assurer un jeu entre la gâche et la deuxième platine ;
- la butée comprend : une patte s'étendant depuis l'une parmi la première platine et la deuxième platine, et une ouverture formée dans l'autre parmi la première platine et la deuxième platine, l'ouverture étant délimitée par une paroi, la patte étant configurée pour venir en appui contre la paroi de l'ouverture ;
- l'ensemble de verrouillage comprend en outre un rebord s'étendant depuis la paroi en direction de la patte, la patte et le rebord étant inclinés et sensiblement parallèles de sorte que la patte est configurée pour venir en contact surfacique avec le rebord lorsque le premier élément est verrouillé par rapport au deuxième élément, de sorte à bloquer en translation la deuxième platine par rapport à la première platine suivant une direction normale à la première face de la première platine ;
- une dimension de l'ouverture formée dans l'autre parmi la première platine et la deuxième platine selon la direction de verrouillage est au moins égale à un cinquième d'une dimension de l'autre parmi la première platine et la deuxième platine selon la direction de verrouillage ; et/ou
- le verrou est réalisé dans un matériau présentant un module d'Young supérieur au module d'Young de la première et de la deuxième platine.

Selon un deuxième aspect, l'invention propose un système de contrôle de véhicules comprenant
- un support, par exemple un trépied ;
- un radar de contrôle de véhicules ; et
- l'ensemble de verrouillage selon le premier aspect, la première platine étant montée sur l'un parmi le support et le radar de contrôle de véhicules et la deuxième platine étant montée sur l'autre parmi le support et le radar de contrôle de véhicules.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue éclatée d'un exemple d'ensemble de verrouillage conforme à un mode de réalisation de l'invention ;
La figure 2 est une vue en coupe et en perspective d'un système comprenant l'ensemble de verrouillage de la figure 1 monté sur un premier et un deuxième élément ; et
La figure 3 est une vue en coupe du système de la figure 2.

Sur l'ensemble des figures, les éléments similaires portent des références identiques.

### DESCRIPTION DETAILLEE DE L'INVENTION

Dans la description qui suit, l'invention va plus particulièrement être décrite dans le cas du verrouillage d'un système de contrôle de véhicules comprenant un radar 2 de contrôle de véhicules et un trépied 3. Ceci n'est cependant pas limitatif, l'ensemble de verrouillage 1 de l'invention pouvant être mise en œuvre dans la fixation amovible de deux pièces quelconques.

L'ensemble de verrouillage 1 comprend une première platine 4 et une deuxième platine 5 configurées pour être montées respectivement sur le trépied 3 et le radar de contrôle de véhicules 2.

Chaque platine 4, 5 comprend une première face, ou face supérieure, et une deuxième face, ou face inférieure, la face supérieure 7 de la première platine 4 étant configurée pour être placée face à la face inférieure 6 de la deuxième platine 5.

Dans ce qui suit, l'invention sera décrite dans le cas où la première platine 4 est montée fixe sur le trépied 3 tandis que la deuxième platine 5 est montée fixe sur le radar 2. La première platine 4 sera donc appelée « platine inférieure 4 » et la deuxième platine 5 « platine supérieure 5 » pour simplifier la lecture. Ici encore, ceci n'est pas limitatif, la première platine 4 pouvant être fixée sur le radar 2 et se trouver sous la deuxième platine 5 qui serait alors fixée sur le trépied 3.

Afin de faciliter le montage du radar 2, qui est lourd et encombrant, sur le trépied 3, la platine supérieure 5 et la platine inférieure 4 peuvent être sensiblement planes. Elles peuvent notamment comprendre chacune une tôle métallique, qui sont réalisées dans tout matériau adapté tel que de l'aluminium ou de l'acier.

L'ensemble de verrouillage 1 comprend en outre une butée 8 configurée pour bloquer en translation la première platine 4 par rapport à la deuxième platine 5 suivant un premier sens A le long d'une direction de verrouillage X, ainsi qu'un verrou 9 mobile en translation le long de la direction de verrouillage X et qui est configuré pour bloquer en translation la platine supérieure 5 par rapport à la platine inférieure 4 dans un deuxième sens B qui est opposé au premier sens A. Le simple actionnement du verrou 9 permet ainsi de verrouiller ou déverrouiller la platine supérieure 5 sur la platine inférieure 4, selon le sens de translation choisi le long de la direction de verrouillage X.

Dans une forme de réalisation, le verrou 9 comprend une gâche 10, une attache 11 et un logement 12 configuré pour recevoir l'attache 11.

La gâche 10 est montée sur l'une parmi la platine supérieure 5 ou la platine inférieure 4. Par exemple, dans l'exemple illustré sur les figures, la gâche 10 est montée sur la face supérieure 7 de la platine supérieure 5, qui comprend alors un passage traversant 13 permettant de dévoiler en partie la gâche 10 et de permettre la coopération de l'attache 11 avec le logement 12. En variante, la gâche 10 pourrait être montée sur la face inférieure 6 de la platine supérieure 5. Comme nous le verrons par la suite, le montage de la gâche 10 sur la platine située au-dessus (ici, la platine supérieure) présente l'avantage d'être plus ergonomique pour l'opérateur.

La gâche 10 est par ailleurs mobile en translation le long de la direction de verrouillage X entre une configuration de verrouillage et une configuration de déverrouillage. Pour cela, la gâche 10 peut par exemple être montée sur la platine supérieure 5 par l'intermédiaire d'une liaison glissière 14. La liaison glissière 14 peut typiquement comprendre au moins un rail formé dans la platine supérieure 5 et une série de boulons. De manière connue en soi, chaque boulon comprend une vis et un écrou, la tête de la vis étant placée dans le rail tandis que sa tige est insérée dans des trous correspondants formés dans la gâche 10 et fixée sur la gâche 10 à l'aide de l'écrou correspondant. Le cas échéant, afin de faciliter le serrage de la gâche 10 sur la platine supérieure 5 tout en garantissant son coulissement relatif, des rondelles (ou entretoises 15) sont emmanchées sur la tige des boulons et logées au sein des trous de la gâche 10. De préférence, les entretoises 15 présentent une épaisseur supérieure à celle de la gâche 10 afin de faciliter le serrage des boulons.

La gâche 10 peut comprendre une poignée 16 afin de faciliter les manipulations du verrou 9 par l'opérateur. Cette poignée 16 est de préférence placée à proximité d'un bord de la gâche 10 afin d'être aisément accessible par l'opérateur.

Avantageusement, la poignée 16 est orientée perpendiculairement à la direction de verrouillage X afin de faciliter l'actionnement du mécanisme par l'opérateur

L'attache 11 est fixée sur l'une parmi la face supérieure 7 de la platine inférieure 4 et la gâche 10 tandis que le logement 12 est formé dans l'autre parmi la face supérieure 7 de la platine inférieure 4 et la gâche 10 et est configurée pour recevoir l'attache 11.

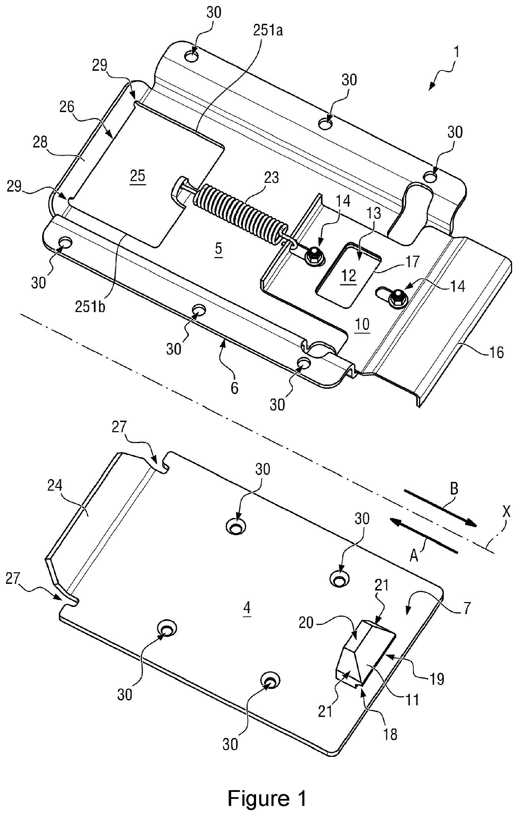

Dans une première forme de réalisation, qui est visible ici sur les figures 1 à 3, l'attache 11 est fixée sur la face supérieure 7 de la platine inférieure 4 et fait saillie en direction de la gâche 10 tandis que le logement 12 est formé dans la gâche 10. Le logement 12 est ici un orifice traversant, c'est-à-dire qui débouche sur les deux faces opposées de la gâche 10 afin de permettre à l'attache 11 de le traverser de part en part, et qui est délimité par une bordure 17 interne de la gâche 10. Ceci n'est cependant pas limitatif, la gâche 10 pouvant être épaisse et le logement 12 suffisamment profond pour recevoir tout le volume de l'attache 11.

La gâche 10 étant ici placée contre la face supérieure 7 de la platine supérieure 5, le logement 12 s'étend en outre dans le prolongement du passage traversant 13 formé dans la platine supérieure 5 afin de pouvoir recevoir l'attache 11.

Une rainure de blocage 18 est formée dans la face de l'attache 11 qui est opposée à la butée 8. Ainsi, lorsque l'attache 11 est introduite dans le logement 12 et que la gâche 10 est amenée en configuration de verrouillage, la bordure 17 du logement 12 est insérée dans la rainure de blocage 18 de l'attache 11 et bloque en translation la gâche 10 par rapport aux platines 4, 5 suivant le deuxième sens B. La bordure 17 étant introduite dans la rainure de blocage 18, il n'est alors pas possible de sortir l'attache 11 du logement 12, la face supérieure 7 de la gâche 10 étant plaquée contre la face en regard de la rainure de blocage 18. La rainure de blocage 18 permet donc également de bloquer en translation la platine supérieure 5 par rapport à la platine inférieure 4 suivant une direction normale à la face supérieure 7 de la première platine 4. En revanche, lorsque la gâche 10 est amenée dans sa configuration de déverrouillage, la bordure 17 du logement 12 est libérée de la rainure de blocage 18 de l'attache 11, ce qui permet de sortir l'attache 11 du logement 12 et de séparer les deux platines 4, 5.

Pour faciliter l'insertion à l'aveugle de l'attache 11 dans le logement 12, l'attache 11 comprend un chanfrein 19 permettant à la bordure 17 du logement 12 de glisser le long de l'attache 11 jusqu'à la rainure de blocage 18. A cet effet, la rainure de blocage 18 est formée dans la base 20b du chanfrein 19 (à proximité de la platine inférieure 4), et le chanfrein 19 est conformé de sorte à converger de la base 20b de l'attache 11, à proximité de la rainure de blocage 18, en direction du logement 12. La surface du chanfrein 19 est donc inclinée et forme un angle aigu au niveau de son sommet 20a qui peut être compris entre 35° et 60°, de préférence entre 40° et 50°.

De la sorte, lors de l'assemblage des deux platines 4, 5, la bordure 17 glisse sur la surface inclinée du chanfrein 19 de l'attache 11 jusqu'à atteindre la rainure de blocage 18. Il n'est donc pas nécessaire à l'opérateur de placer avec précision l'attache 11 en face du logement 12 puisque la bordure 17 du logement 12 est guidée par le chanfrein 19 vers la rainure de blocage 18.

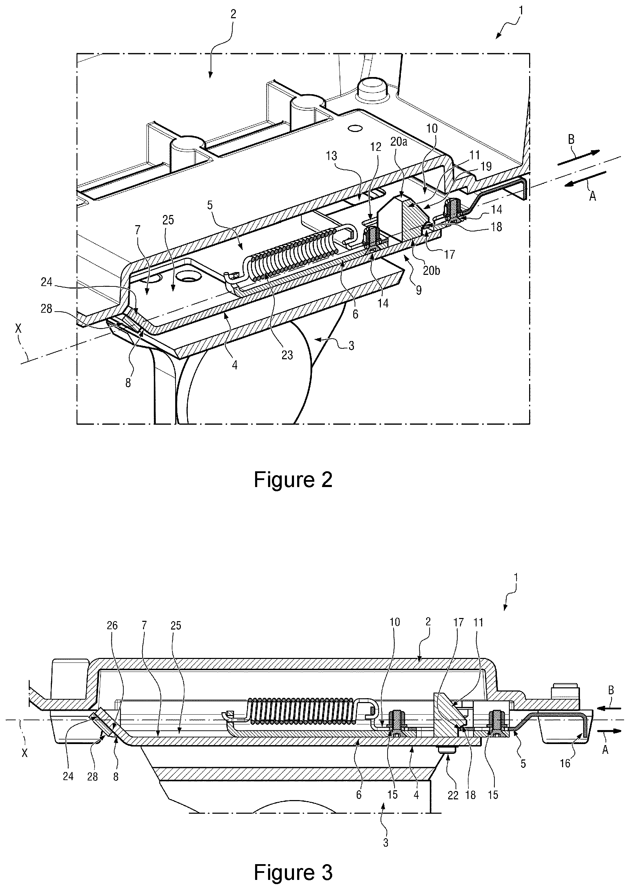

Optionnellement, l'attache 11 peut présenter une section à la base 20b sensiblement carrée et comprendre des chanfreins latéraux 21 (visibles par exemple sur les figures 1 et 3) perpendiculaire au chanfrein 19 et qui convergent de la base 20b vers le sommet 20 de l'attache. Ces chanfreins latéraux 21 participent également au guidage de la bordure 17 du logement 12, en particulier lorsque la largeur du logement suivant une direction perpendiculaire à la direction de verrouillage est au plus égale à 120% de la largeur suivant cette direction de l'attache 11. Cet ajustement de la largeur du logement 12 par rapport à la largeur de l'attache 11 limite les risques de sortie intempestive de l'attache 11.

L'attache 11 et la gâche 10 sont de préférence réalisées dans des matériaux résistants à l'usure et au frottement, typiquement en acier inoxydable. L'attache 11 peut être réalisée dans le même matériau que la platine inférieure 4, auquel cas elle peut être monolithique avec la platine inférieure 4, ou réalisée dans un matériau distinct de la platine inférieure 4, par exemple pour des questions de coût ou de densité, auquel cas elle peut être rapportée et fixée sur la platine inférieure 4. Par exemple, l'attache 11 peut être fixée à la platine inférieure 4 à l'aide d'une vis 22. Le cas échéant, la tête de la vis peut être fraisée afin de ne pas faire saillie de la face inférieure 6 de la platine inférieure 4.

Dans une deuxième forme de réalisation (non illustrée) qui est équivalente à la première, l'attache 11 est fixée sur la gâche 10 et fait saillie (le cas échéant, à travers le passage traversant 13 formé dans la platine supérieure 5) en direction de la face supérieure 7 de la platine inférieure 4, tandis que le logement 12 est formé et débouche dans la face supérieure 7 de la platine inférieure 4.

Afin de garantir le blocage de l'attache 11 dans le logement 12, la gâche 10 est raccordée à la platine supérieure 5 par l'intermédiaire d'un moyen de rappel 23 configuré pour ramener la gâche 10 vers sa configuration verrouillée. Le moyen de rappel 23 peut notamment comprendre un ressort 23 en traction.

Le ressort 23 peut comprendre une première extrémité fixée sur la platine supérieure 5, de préférence sur la même face que la gâche 10, et une deuxième extrémité fixée sur la gâche 10. Le ressort 23 de rappel est aligné avec la direction de verrouillage X et est positionné sur la platine supérieure 5 de sorte à se trouver à l'opposé de la poignée 16.

La raideur du ressort 23 est en outre choisie de sorte que, en l'absence d'efforts appliqués sur la gâche 10, le ressort 23 amène et maintient la gâche 10 dans sa configuration verrouillée et que, lorsqu'un opérateur applique un effort raisonnable sur la gâche 10, il puisse l'amener sans difficultés dans sa configuration déverrouillée. La raideur du ressort 23 peut par exemple être comprise entre 3 et 3.6 N/mm. De la sorte, lorsqu'un opérateur verrouille le radar 2 sur le trépied 3, il lui suffit de placer le sommet 20a de l'attache 11 face au logement 12 puis de laisser glisser le bord du logement 12 le long du chanfrein 19 de l'attache 11. Sous l'effet du poids du radar 2 auquel peut éventuellement être additionné un léger appui de la part de l'opérateur, le chanfrein 19 applique un effort sur la gâche 10 qui est opposé à l'effort de rappel du ressort 23 et le surpasse, ce qui déplace la gâche 10 vers sa configuration de déverrouillage. Avantageusement, l'opérateur n'a pas besoin de tirer sur la poignée 16 dans le deuxième sens suivant la direction de verrouillage X. Ainsi, l'opérateur peut tenir le radar 2, qui est très lourd et volumineux, avec ses deux mains. Lorsque la bordure 17 vient se loger dans la rainure de blocage 18, le chanfrein 19 n'offre plus de résistance à la gâche 10 : l'effort de rappel appliqué sur la gâche 10 par le ressort 23 a alors pour effet de l'amener automatiquement dans sa configuration verrouillée. Le cas échéant, l'entrée de la bordure 17 dans la rainure de blocage 18 peut générer un effet sonore (cliquètement) confirmant à l'opérateur la mise en prise de l'attache 11 et de la bordure 17. Le ressort 23 assure alors le maintien de la bordure 17 dans la rainure de blocage 18, ce qui limite les risques de sortie intempestive de l'attache 11 du logement 12, même lorsque le radar 2 est penché. Il suffit ensuite à un opérateur de libérer la bordure 17, par exemple en tirant sur la poignée 16 de la gâche 10, pour séparer les platines 4, 5.

Dans une variante de réalisation, le moyen de rappel 23 peut comprendre un ressort de compression. Dans cette variante, le ressort 23 est alors placé du côté de la poignée 16 pour pouvoir amener et maintenir la gâche 10 dans sa configuration verrouillée. Le montage d'un ressort 23 en compression risque cependant d'être plus encombrant que le montage d'un ressort 23 en traction compte-tenu de la présence de la poignée 16.

La butée 8 peut comprendre tout moyen permettant de mettre en butée axiale la platine supérieure 5 par rapport à la platine inférieure 4 le long de la direction de verrouillage X.

Dans une forme de réalisation, la butée 8 peut par exemple comprendre une patte 24 s'étendant depuis la platine inférieure 4 qui est configurée pour être insérée dans une ouverture 25 formée dans la platine supérieure 5 et venir en appui contre une paroi 26 délimitant cette ouverture 25. La patte 24 peut par exemple comprendre une plaque s'étendant depuis la face supérieure 7 de la platine inférieure 4 en formant un angle obtus avec à celle-ci. Cette forme de réalisation permet ainsi de réaliser de manière très simple une butée 8, par exemple en pliant la platine inférieure 4 de sorte à obtenir la patte 24 inclinée et en réalisant, par exemple par laser, l'ouverture 25 dans la platine supérieure 5. Le cas échéant, la platine inférieure 4 peut être détourée afin de former des encoches 27 de part et d'autre du pli de la patte 24 et qui s'étendent depuis le pli en direction de la gâche 10. Les encoches 27 permettent alors de limiter les défauts et bavures lors du pliage de la patte 24 et, optionnellement, de venir en prise avec la paroi 26 de la platine supérieure 5. La patte 24 et la platine supérieure 5 sont alors monolithiques, ce qui simplifie la fabrication de l'ensemble de verrouillage 1.

Dans une variante de réalisation, la platine supérieure 5 peut comprendre un rebord 28 qui s'étend depuis la paroi 26 délimitant l'ouverture 25 formée dans la platine supérieure 5. Le rebord 28 s'étend sensiblement parallèlement à la patte 24. De la sorte, lorsque la patte 24 est introduite dans l'ouverture 25 formée dans la platine supérieure 5, sa surface inférieure vient en contact surfacique avec la surface inférieure du rebord 28, lorsque la platine supérieure 5 est verrouillée par rapport à la platine inférieure 4. Ainsi, lorsque la patte 24 est en contact surfacique avec le rebord 28, la face inférieure 6 de la platine supérieure 5 et la face supérieure 7 de la platine inférieure 4 sont en contact surfacique alors que c'est la surface inférieure de la patte 24 (dans le prolongement de la face opposée à la face supérieure 7) qui est en contact surfacique avec la surface inférieure du rebord 28 (dans le prolongement de la face opposée à la face inférieure 6). Les faces des platines 4, 5 qui sont en contact surfacique sur les parties de patte 24 et de rebord 28 sont opposées aux faces 6, 7 des platines 4, 5 qui sont en contact sur les parties principales plan. Les parties en contact sur une face d'une platine, sont en contact sur l'autre face au niveau de la patte 24 et du rebord 28.

Avantageusement, la patte 24 et le rebord 28 sont inclinés par rapport aux faces 6, 7 de la platine 4, 5 correspondante. La patte 24 et le rebord 28 peuvent par exemple former un angle compris entre 100° et 150°, de préférence entre 120° et 140°, avec la platine 5, 4 correspondante.

L'agencement particulier de la patte 24 par rapport au rebord 28 ainsi que leur inclinaison par rapport aux platines 5, 4 permet, lorsque la patte 24 et le rebord 28 sont en contact surfacique, que la platine supérieure 5 soit bloquée en translation par rapport à la inférieure platine 4 le long de la direction de verrouillage X et suivant la direction normale à la face supérieure 7 de la platine inférieure 4.

La patte 24 et le rebord 28 peuvent en outre être monolithiques avec la platine correspondante. La patte 24 et le rebord 28 sont par exemple obtenues par pliage de la platine 4, 5 correspondante.

De préférence, la patte 24 et le rebord 28 s'étendent depuis le bord de la platine 5, 4 correspondante qui est opposé au verrou 9. Cette configuration permet en effet d'améliorer l'engagement du verrou 9 et de la butée 8 (qui appliquent des efforts en sens contraire aux platines 4, 5) ainsi que l'ergonomie de l'ensemble de verrouillage 1.

L'ouverture 25 est délimitée par deux bords longitudinaux 251a, 251b orientés selon la direction de verrouillage X. Ces bords longitudinaux 251a, 251b peuvent le cas échéant former des guides pour un glissement en translation de la patte 24 au sein de l'ouverture 25 jusqu'à la paroi 26 et/ou le rebord 28.

Ainsi, une longueur des bords longitudinaux 251a, 251b de l'ouverture 25 selon la direction de verrouillage est au moins égale à deux centimètres, de préférence au moins égale à cinq centimètres, afin de simplifier l'insertion à l'aveugle de la patte 24 dans l'ouverture 25 puis son glissement au sein de l'ouverture le long des deux guides formés par lesdits bords longitudinaux 251a, 251b.

Dans une autre forme de réalisation (non illustrée sur les figures), la butée 8 comprend un ou plusieurs plots s'étendant depuis l'une parmi la face inférieure 6 de la platine supérieure 5 et la face supérieure 7 de la platine inférieure 4 et autant de trous formés dans l'autre parmi la face inférieure 6 de la platine supérieure 5 et la face supérieure 7 de la platine inférieure 4 configurés pour recevoir un plot correspondant.

Quelle que soit la forme de réalisation de la butée 8, le ressort 23 en traction, la gâche 10 et le cas échéant la poignée 16 sont alignés, de préférence successivement, le long de la direction de verrouillage X. Cette configuration permet en effet d'éviter que les platines 4, 5 ne pivotent l'une par rapport à l'autre lorsque l'attache 11 est verrouillée dans le logement 12 et que les platines 4, 5 sont en butée. Elle rend en outre l'ensemble de verrouillage 1 particulièrement ergonomique et facile à mettre en prise pour l'opérateur.

Les platines 4, 5 peuvent être montées sur tout élément, et en particulier tout radar 2 et tout trépied 3.

Afin de rendre les platines 4, 5 universelles, une série de perçages 30 peut être prévue afin de permettre la fixation de chaque platine 4, 5 sur l'élément 2, 3 correspondant à l'aide de vis. De préférence, chaque platine 4, 5 comprend au moins quatre perçages 30. Optionnellement, un plus grand nombre de perçages 30 peut être prévu afin de permettre l'adaptation des platines 4, 5 sur un plus grand nombre de radars 2 et de trépieds 3.

Le verrouillage de l'ensemble 1 peut être réalisé comme suit, par exemple dans le cas du verrouillage d'un radar 2 sur un trépied 3.

Le trépied 3 est placé de préférence debout (verticalement) sur le sol. La platine inférieure 4 est fixée au sommet 20a du trépied 3 et s'étend parallèlement au sol (horizontalement). La platine supérieure 5 est fixée sur la face inférieure du radar 2. Le cas échéant, la face inférieure du radar 2 peut être aménagée afin de permettre la fixation de la platine supérieure 5 et l'insertion de l'attache 11 dans le logement 12. Par exemple, un renfoncement peut être formé dans la face inférieure du radar 2 afin de recevoir sans contact le ressort 23, la gâche 10 et l'attache 11.

Les platines 4, 5 peuvent par exemple être fixées par vissage sur le radar 2 et le trépied 3.

Pour verrouiller un radar 2 mobile comprenant une platine supérieure 5 sur un trépied 3 fixe comprenant une platine inférieure 4, l'opérateur met d'abord en butée les deux platines 4, 5, en particulier en positionnant le radar 2 de façon à ce que la patte 24 de la platine inférieure 4 soit placée dans l'ouverture 25 de la platine supérieure 5. Ensuite, l'opérateur fait glisser la platine supérieure 5 du radar 2 selon la direction de verrouillage X et le deuxième sens B jusqu'à ce que la patte 24 arrive en fin de course contre la paroi 26 de l'ouverture 25. Lorsque la platine supérieure 5 comprend un rebord 28, le glissement de la patte 24 au sein de l'ouverture 25 est effectué en direction du rebord 28. En fin de course au sein de l'ouverture 25, la patte 24 et le rebord 28 sont en contact l'un contre l'autre.

La platine supérieure 5 se trouve alors en butée axiale contre la platine inférieure 4, ce qui bloque le radar 2 par rapport au trépied 3 suivant le deuxième sens B.

L'opérateur fait ensuite pivoter le radar 2 autour de la patte 24 de sorte à rapprocher les platines 4, 5 l'une de l'autre. En particulier, le radar 2 pivote autour de la surface de contact de la patte 24 et du rebord 28. Ce mouvement permet de placer l'attache 11 dans le logement 12. La bordure 17 du logement 12 glisse le long du chanfrein 19 de l'attache 11 jusqu'à atteindre la rainure de blocage 18. Ce mouvement a pour effet de surmonter l'effort appliqué par le ressort 23 sur la gâche 10 et de translater la gâche 10 par rapport à la platine supérieure 5, grâce notamment au poids appliqué par le radar 2 sur l'attache 11. Une fois que la bordure 17 atteint la rainure de blocage 18, l'effort appliqué par le ressort 23 a pour effet de ramener la gâche 10 (suivant le premier sens A) contre l'attache 11, sous la rainure de blocage 18. Un effet sonore peut être généré (cliquètement), confirmant ainsi le verrouillage de du radar 2 sur le trépied 3 (c'est à dire le verrouillage de l'ensemble 1).

La face supérieure 7 de l'attache 11 se trouve en butée contre la face supérieure 7 de la gâche 10 et est maintenue dans cette position par le ressort 23, ce qui empêche toute séparation intempestive des platines 4, 5.

Pour déverrouiller l'ensemble 1, l'opérateur tire sur la poignée 16 dans le deuxième sens B, libérant ainsi à la bordure 17 du logement 12 de la rainure de blocage 18 de l'attaque 11. Ensuite, en maintenant la poignée tirée, l'opérateur fait pivoter le radar 2 autour de la patte 24 de sorte à éloigner les platines 4, 5 l'une de l'autre. En particulier, le radar 2 pivote autour de la surface de contact de la patte 24 et du rebord 28. Cela permet de faire sortir l'attache 11 du logement 12. Une fois l'attache 11 sortie du logement 12, l'opérateur fait glisser la platine supérieure 5 pour éloigner la paroi 26 et le cas échéant le rebord 28 de la patte 24 selon la direction de verrouillage X et le premier sens A. Ensuite, l'opérateur soulève le radar 2 pour dégager la patte 24 de l'ouverture 25 formée dans la platine supérieure 5.

A titre indicatif, un radar de contrôle de véhicules 2 peut peser jusqu'à 10 kg et est généralement fixé à l'aveugle sur un trépied 3 à 1,60 m de hauteur. L'ensemble de verrouillage 1 permet ainsi de rendre la fixation amovible du radar 2, qui est lourd, sur le trépied 3, qui est relativement haut, de manière simple, rapide et ergonomique.

## Revendications

1. Ensemble de verrouillage (1) configuré pour verrouiller un radar de contrôle de véhicules (2) par rapport à un support (3) comprenant:
- une première platine (4) configurée pour être montée fixe sur l'un parmi le support (3) et le radar de contrôle de véhicule (2) et présentant une première face (7) ;
- une deuxième platine (5) configurée pour être montée fixe sur l'autre parmi le radar de contrôle de véhicules (2) et le support (3), la deuxième platine (5) comprenant une deuxième face (6) configurée pour être placée face à la première face (7) de la première platine (4) ;
- une butée (8) configurée pour bloquer en translation la première platine (4) par rapport à la deuxième platine (5) suivant un premier sens (A) le long d'une direction de verrouillage (X); et
- un verrou (9) distinct de la butée (8) et mobile en translation le long de la direction de verrouillage (X), le verrou (9) étant configuré pour bloquer en translation la première platine (4) par rapport à la deuxième platine (5) dans un deuxième sens (B) qui est opposé au premier sens (A).

2. Ensemble de verrouillage (1) selon la revendication 1, dans lequel le verrou (9) comprend :
- une gâche (10) montée sur la deuxième platine (5) ;
- une attache (11) fixée sur l'une parmi la première face (7) de la première platine (4) et la gâche (10) et comprenant une rainure de blocage (18) ; et
- un logement (12) formé dans l'autre parmi la première face (7) de la première platine (4) et la gâche (10) et configurée pour recevoir l'attache (11), le logement (12) étant délimité par une bordure (17) ; la gâche (10) étant mobile en translation le long de la direction de verrouillage (X) entre une configuration de verrouillage dans laquelle la bordure (17) du logement (12) est insérée dans la rainure de blocage (18) de l'attache (11) et bloque en translation la gâche (10) par rapport à la première et à la deuxième platine (4, 5) suivant le deuxième sens (B), et une configuration de déverrouillage dans laquelle la bordure (17) du logement (12) est libérée de la rainure de blocage (18) de l'attache (11), la rainure de blocage (18) étant en outre configurée pour bloquer en translation la deuxième platine (5) par rapport à la première platine (4) suivant une direction normale à la première face (7) de la première platine (4).

3. Ensemble de verrouillage (1) selon la revendication 2, dans lequel l'attache (11) comprend un chanfrein (19) convergeant d'une base (20b) de l'attache (11) en direction du logement (12), la rainure de blocage (18) étant formée à proximité de la base (20b) de l'attache (11).

4. Ensemble selon l'une des revendications 2 et 3, dans lequel la gâche (10) est raccordée à la deuxième platine (5) par l'intermédiaire d'un moyen de rappel (23) configuré pour ramener la gâche (10) vers la configuration verrouillée, la butée (8), le moyen de rappel (23) et la gâche (10) étant alignés le long de la direction de verrouillage (X).

5. Ensemble selon l'une des revendications 2 à 4, dans laquelle la gâche (10) est fixée sur la deuxième platine (5) par l'intermédiaire d'entretoises (15) configurées pour assurer un jeu entre la gâche (10) et la deuxième platine (5).

6. Ensemble de verrouillage (1) selon l'une des revendications 1 à 5, dans lequel la butée (8) comprend :
- une patte (24) s'étendant depuis l'une parmi la première platine (4) et la deuxième platine (5), et
- une ouverture (25) formée dans l'autre parmi la première platine (4) et la deuxième platine (5), l'ouverture (25) étant délimitée par une paroi (26), la patte (24) étant configurée pour venir en appui contre la paroi (26) de l'ouverture.

7. Ensemble de verrouillage (1) selon la revendication 6, comprenant en outre un rebord (28) s'étendant depuis la paroi (26) en direction de la patte (24), la patte (24) et le rebord (28) étant inclinés et sensiblement parallèles de sorte que la patte (24) est configurée pour venir en contact surfacique avec le rebord (28) lorsque le radar de contrôle de véhicules (2) est verrouillé par rapport au support (3), de sorte à bloquer en translation la deuxième platine (5) par rapport à la première platine (4) suivant une direction normale à la première face (7) de la première platine (4).

8. Ensemble de verrouillage (1) selon l'une des revendications 6 et 7, dans lequel une dimension de l'ouverture (25) formée dans l'autre parmi la première platine (4) et la deuxième platine (5) selon la direction de verrouillage (X) est au moins égale à un cinquième d'une dimension de l'autre parmi la première platine (4) et la deuxième platine (5) selon la direction de verrouillage (X).

9. Ensemble de verrouillage (1) selon l'une des revendications 1 à 8, dans lequel le verrou (9) est réalisé dans un matériau présentant un module d'Young supérieur au module d'Young de la première et de la deuxième platine (4, 5).

10. Système de contrôle de véhicules comprenant
- un support (3), par exemple un trépied ;
- un radar de contrôle de véhicules (2) ; et
- l'ensemble de verrouillage (1) selon l'une des revendication 1 à 9, la première platine (4) étant montée sur l'un parmi le support (3) et le radar de contrôle de véhicules (2) et la deuxième platine (5) étant montée sur l'autre parmi le support (3) et le radar de contrôle de véhicules (2).
